# EUROPEAN PATENT APPLICATION

(11) **EP 1 983 778 A1**
(43) Date of publication of application: **22.10.2008**
(21) Application number: 07106457.0
(22) Date of filing: 18.04.2007
(51) Int. Cl.: H04Q 7/32, H04L 12/28

(54) **Determining a WLAN regulatory domain**

(71) Applicant: Research In Motion Limited, Waterloo, Ontario N2L 3W8 (CA)
(72) Inventor: Abdel-Kader, Sherif Aly, Waterloo, Ontario N2K 4H7 (CA); Montemurro, Michael, Toronto, Ontario M6S 1X6 (CA); Oliver, Brian, Fergus, Ontario N1M 1C8 (CA)
(74) Representative: Rickard, David John

(57) **Abstract**

A mobile station (100, 150) is in a wireless local area network 'WLAN' environment and receives beacon frames that lack any WLAN regulatory information. The mobile station (100, 150) nonetheless determines a WLAN regulatory domain and configures the physical layer of its WLAN interface (106) for operation in that WLAN regulatory domain.

## Description

There are two types of scanning that a wireless local area network (WLAN) client device may use to search for wireless local area networks to associate with. In ***passive scanning**,* the device generally listens for beacon frames broadcast by access points (APs), one communication channel at a time. The beacon frames include the service set identifier (SSID) of the WLAN being hosted by the AP. Since beacon frames are often broadcast at regular intervals of approximately 100 ms, the device typically has to "dwell" for about 105 ms per channel before assuming there are no APs on that channel and trying a different channel. In ***active scanning,*** the device transmits an active probe request on a communication channel on which the regulatory regulations allow active probing. The device may receive one or more probe responses from APs. The probe responses may be received within 15 ms of the transmission of the active probe request. If no probe response is received within that time, it is assumed that there are no APs on that channel and the device may try a different channel. This makes active scanning relatively fast.

The physical layer of a WLAN is subject to regulations that can vary significantly from one geopolitical area to another. Regulators include the Federal Communications Commission (FCC), the European Telecommunications Standards Institute (ETSI), and the Telecom Engineering Center (MKK or TELEC). The North American WLAN regulatory domain covers North, South and Central America, Australia and New Zealand, and various parts of Asia. The ETSI WLAN regulatory domain covers Europe, the Middle East, Africa, and various parts of Asia. The TELEC WLAN regulatory domain covers Japan.

The frequency spectrum is divided into channels, and the regulations for a particular WLAN regulatory domain may include, for example, on which channels transmissions are permitted and the maximum transmit power levels permitted on those channels. The regulations may also include parameters for antenna gain.

IEEE 802.11b/g communications use the unlicensed 2.4 GHz band. For example, channels 12, 13 and 14 are used in Japan but transmissions on these channels are prohibited in the North American WLAN regulatory domain.

IEEE 802.11a communications use the 5 GHz band, and different countries in the world have different valid 5 GHz channels. For example, Japan presently only has the 5.15 to 5.35 GHz band, while the ETSI WLAN regulatory domain has both the 5.15 to 5.35 GHz band and the 5.47 to 5.725 GHz band. The North American WLAN regulatory domain will soon have three bands: 5.15 to 5.35 GHz, 5.725 to 5.85 GHz and 5.47 to 5.725 GHz.

Prior to the introduction of the IEEE 802.11d standard, mobile stations (STAs) were provisioned for a particular WLAN regulatory domain. Some STAs provisioned for Europe would allow a user to manually change the country code, but other WLAN regulatory domains prohibited this behavior. In order not to violate any of the regulations for maximum transmit power level, some STAs would enforce a maximum transmit power level that is the minimum of the permitted maximum transmit power levels in different WLAN regulatory domains. However, this reduces the range of the STA.

The IEEE 802.11d standard describes a mechanism that allows compatible equipment to be able to operate in more than one WLAN regulatory domain over time. An AP that has enabled IEEE 802.11d functionality will include in the beacon frames that it broadcasts a country information element (IE). The country IE contains the information required to allow a STA to identify the WLAN regulatory domain in which the STA is located and to configure the physical layer of its WLAN interface for operation in that WLAN regulatory domain. The country IE includes a country string and one or more channel triplets.

The country string contains an International Organization of Standardization (ISO) country code for the country in which the AP is located. Each country name in English as given in ISO 3166-1 has a corresponding ISO 3166-1-alpha-2 code element. For example, the code elements for Canada, the United States of America and Japan, are CA, US and JP, respectively. A channel triplet indicates a starting channel, a number of channels, and a maximum transmit power level permitted on those channels.

According to the IEEE 802.11d standard, a STA that is enabled for operation across WLAN regulatory domains defaults to passive scanning when it has lost connectivity with its extended service set (ESS). Passive scanning is performed using only the receive capabilities of the station and is, thus, compatible with regulatory requirements. When a STA enters a WLAN regulatory domain, it passively scans to learn at least one valid channel, i.e. a channel upon which it detects IEEE 802.11 beacon frames. The beacon frame contains information on the country code, the maximum allowable transmit power, and the channels to be used for the WLAN regulatory domain. Once the STA has acquired the information so that it is able to meet the transmit requirements of the WLAN regulatory domain, it transmits a request to an AP to gain the additional WLAN regulatory domain information contained in the response frame, unless the information was previously received in a beacon frame. The STA then has sufficient information available to configure its physical layer for operation in the WLAN regulatory domain.

However, if a STA that is compatible with IEEE 802.11d is in a WLAN environment the APs of which are not including the IEEE 802.11d country element in their beacon frames, the STA does not know in which WLAN regulatory domain it is currently located and does not know how to configure its physical layer for operation in that WLAN regulatory domain.

### GENERAL

A mobile station (STA) is in a WLAN environment and receives beacon frames that lack any WLAN regulatory information. The STA nonetheless determines a WLAN regulatory domain, and configures the physical layer of its WLAN interface for operation in that WLAN regulatory domain.

In one aspect, a mobile station may have a WLAN interface that is operable in a first frequency band and in a second frequency band. While passively scanning for wireless local area networks, the mobile station may receive in the first frequency band one or more first beacon frames lacking any indication of a WLAN regulatory domain in which the mobile station is currently located, and receives in the second frequency band one or more second beacon frames comprising one or more indications of the WLAN regulatory domain. The mobile station may determine that the WLAN regulatory domain is to be used also for the first frequency band, retrieves regulatory parameters of the WLAN regulatory domain for the first frequency band, and configures a physical layer of the WLAN interface for operation in the first frequency band according to the retrieved regulatory parameters.

The mobile station may further maintain an indication of the WLAN regulatory domain. Subsequently, in the event that the physical layer is no longer configured for operation in any particular WLAN regulatory domain and no WLAN regulatory information is available from beacon frames received via the WLAN interface, the mobile station may retrieve regulatory parameters of the WLAN regulatory domain for which the indication has been maintained and configures the physical layer for operation according to the retrieved regulatory parameters. If the mobile station also comprises a cellular network interface, the maintained indication of the WLAN regulatory domain may be used only if in addition to the conditions listed above, no mobile country code is available from signals received via the cellular network interface.

In another aspect, a mobile station, while passively scanning for wireless local area networks, may receive one or more beacon frames comprising one or more indications of a WLAN regulatory domain, configures a physical layer of the WLAN interface for operation in the WLAN regulatory domain, and maintains an indication of the WLAN regulatory domain. Subsequently, in the event that the physical layer is no longer configured for operation in any particular WLAN regulatory domain and no WLAN regulatory information is available from beacon frames received via the WLAN interface, the mobile station may retrieve regulatory parameters of the WLAN regulatory domain for which the indication has been maintained and configures the physical layer for operation according to the retrieved regulatory parameters. If the mobile station also comprises a cellular network interface, the maintained indication of the WLAN regulatory domain may be used only if in addition to the conditions listed above, no mobile country code is available from signals received via the cellular network interface.

In a further aspect, a mobile station has been branded with a vendor identifier. The vendor identifier is stored in non-volatile memory in or accessible by the mobile station. The mobile station may identify a country associated with the vendor identifier, identifies a WLAN regulatory domain corresponding to the country, retrieves regulatory parameters of the WLAN regulatory domain, and configures a physical layer of a WLAN interface for operation according to the regulatory parameters.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

FIG. 1 is a block diagram of an exemplary mobile station;

FIG. 2 is a block diagram of another exemplary mobile station;

FIG. 3 is a flowchart of an exemplary method for scanning for wireless local area networks and associating with an access point of a wireless local area network;

FIG. 4 is a flowchart of an exemplary method for determining a WLAN regulatory domain in which a mobile station is currently located; and

FIG. 5 is a flowchart of another exemplary method for determining a WLAN regulatory domain in which a mobile station is currently located.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

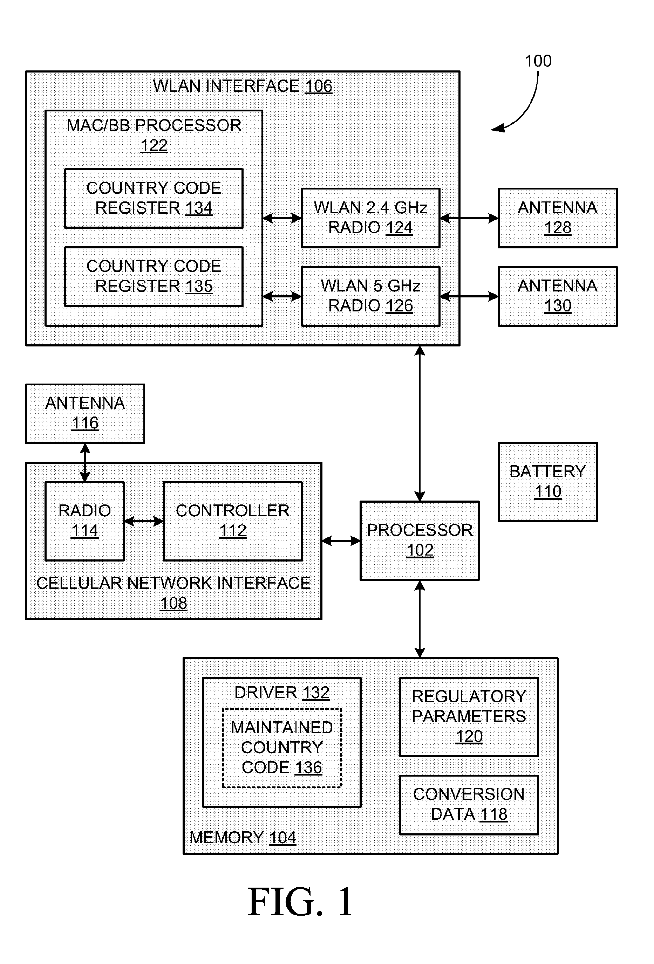

FIG. 1 is a block diagram of an exemplary mobile station 100. STA 100 comprises a processor 102, a memory 104 coupled to processor 102, a WLAN interface 106 coupled to processor 102, and a cellular network interface 108 coupled to processor 102. STA 100 also comprises a battery 110 to power the other elements of the mobile station.

Cellular network interface 110 comprises a controller 112 coupled to a radio 114. STA 100 also comprises an antenna 116 coupled to radio 114. Cellular network interface 110 is compatible with one or more cellular communication standards. Using cellular network interface 110, STA 100 is able to receive the mobile country code (MCC) broadcast by base stations of a cellular network. For example, an MCC for the United States is 310, and the MCC for Canada is 302.

Memory 104 stores conversion data 118 which can be used by STA 100 to determine a WLAN regulatory domain from an MCC. For example, conversion data 118 may include a mapping of MCC to ISO country code. In this example, memory 104 also stores regulatory parameters 120 such as channel triplets on a per-ISO country code basis. In another example, conversion data 118 may include a mapping of MCC to ISO country code and a mapping of ISO country code to WLAN regulatory domain. In this example, memory 104 also stores regulatory parameters 120 such as channel triplets on a per-WLAN regulatory domain basis.

WLAN interface 106 is compatible with one or more WLAN standards of the family of IEEE 802.11 wireless communication standards. WLAN interface 106 comprises a Media Access Control (MAC) and baseband (BB) processor 122 coupled to a WLAN radio. In the example shown in Figure 1, WLAN interface 106 is operable in two frequency bands (the 2.4 GHz band and the 5 GHz band) and therefore MAC/BB processor 122 is coupled to a 2.4 GHz radio 124 and to a 5 GHz radio 126. In other examples, WLAN interface 106 may be operable in only a single frequency band and may comprise only one WLAN radio. STA 100 comprises an antenna 128 coupled to radio 124 and an antenna 130 coupled to radio 126. In other examples, a single antenna may be shared by radio 124 and radio 126. In yet other examples, one or more of the WLAN radios may share antenna 116.

Memory 104 stores a driver 132 for MAC/BB processor 122. Driver 132, when executed by processor 102, controls MAC/BB processor 122.

MAC/BB processor 122 comprises a register 134 to store a value indicative of an ISO country code. MAC/BB processor 122 may comprise separate country code registers for each frequency band in which WLAN interface 106 is operable. For example, since WLAN interface 106 is operable in the 2.4 GHz band and the 5 GHz band, MAC/BB processor 122 comprises register 134 and a register 135 to store a value indicative of an ISO country code.

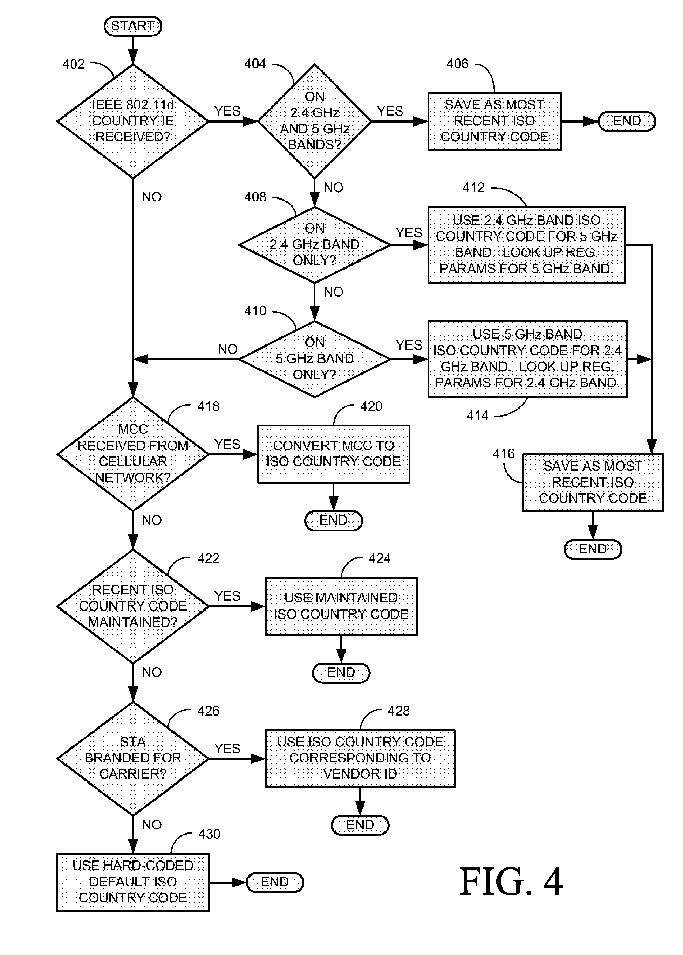

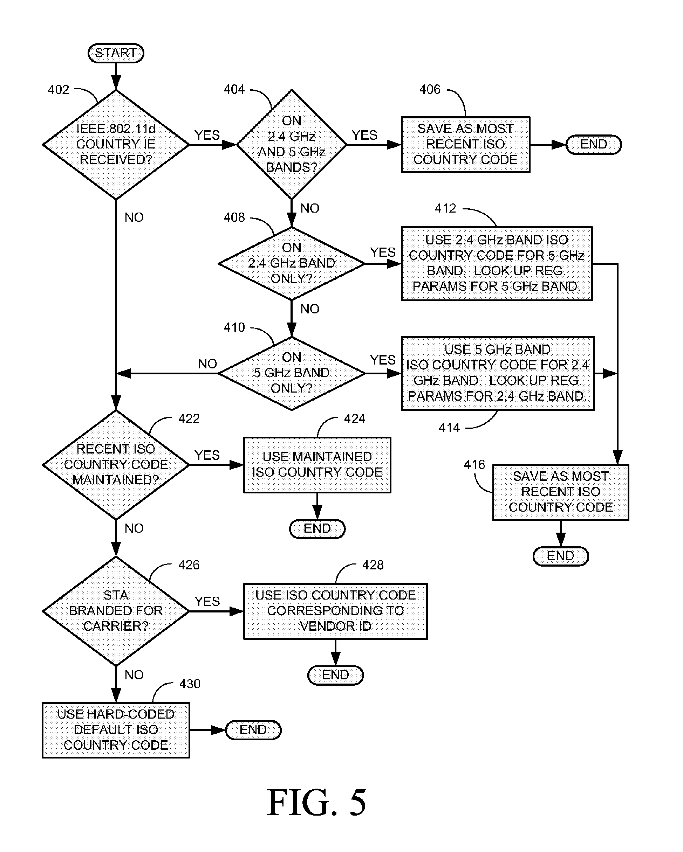

Configuring the physical layer of the WLAN interface 106 for operation in a particular frequency band in a particular WLAN regulatory domain is accomplished, at least in part, by setting in the appropriate register a value indicative of an ISO country code of that particular WLAN regulatory domain. The register is "zeroed" or cleared immediately upon disconnection of STA 100 from an AP. When the register is in a zeroed or cleared state, the physical layer of WLAN interface 106 is not configured for any particular WLAN regulatory domain in that particular frequency band. In response to receipt by WLAN interface 106 in a particular frequency band of a beacon frame containing an IEEE 802.11 d country IE, the appropriate register may be set to a value indicative of the ISO country code contained in the country string of the country IE. Alternatively, the appropriate register may be set to a value by driver 132. For example, in response to receipt by WLAN interface 106 in a particular frequency band of a beacon frame containing an IEEE 802.11d country IE, driver 132 may receive from MAC/BB processor 122 the country string of the country IE. Driver 132 may then set the appropriate register to a value indicative of the ISO country code contained in the country string. In another example, driver 132 may determine the WLAN regulatory domain in the absence of any received IEEE 802.11 d information and may set the appropriate register to a value indicative of the determined WLAN regulatory domain. Driver 132 may optionally maintain an indication 136 of a recent ISO country code setting of either register. Exemplary circumstances under which indication 136 is updated are described hereinbelow with respect to Figure 4 and Figure 5.

In addition to or instead of registers 134 and 135, MAC/BB processor 122 may comprise registers (not shown) to store indications of channel triplets and/or other regulatory parameters for each frequency band in which WLAN interface 106 is operable. Configuring the physical layer of the WLAN interface 106 for operation in a particular frequency band in a particular WLAN regulatory domain is accomplished, at least in part, by setting in the appropriate registers values indicative of the channel triplets and/or other regulatory parameters for the particular frequency band in that particular WLAN regulatory domain. These registers are "zeroed" or cleared immediately upon disconnection of STA 100 from an AP. When these registers are in a zeroed or cleared state, the physical layer of WLAN interface 106 is not configured for any particular WLAN regulatory domain in that particular frequency band. As described above for registers 134 and 135, these registers may be set to appropriate values in response to receipt by WLAN interface 106 of a beacon frame containing an IEEE 802.11d country IE, either by WLAN interface 106 itself or by driver 132. Alternatively, these registers may be set to values by driver 132 after driver 132 has determined the WLAN regulatory domain in the absence of any received IEEE 802.11d information. In addition to or instead of indication 136, driver 132 may optionally maintain indications (not shown) of recent channel triplets and/or other regulatory parameters used to configure the PHY. Exemplary circumstances under which those indications are updated are described hereinbelow with respect to Figure 4 and Figure 5. STA 100 comprises other components that, for clarity, are not shown in Figure 1.

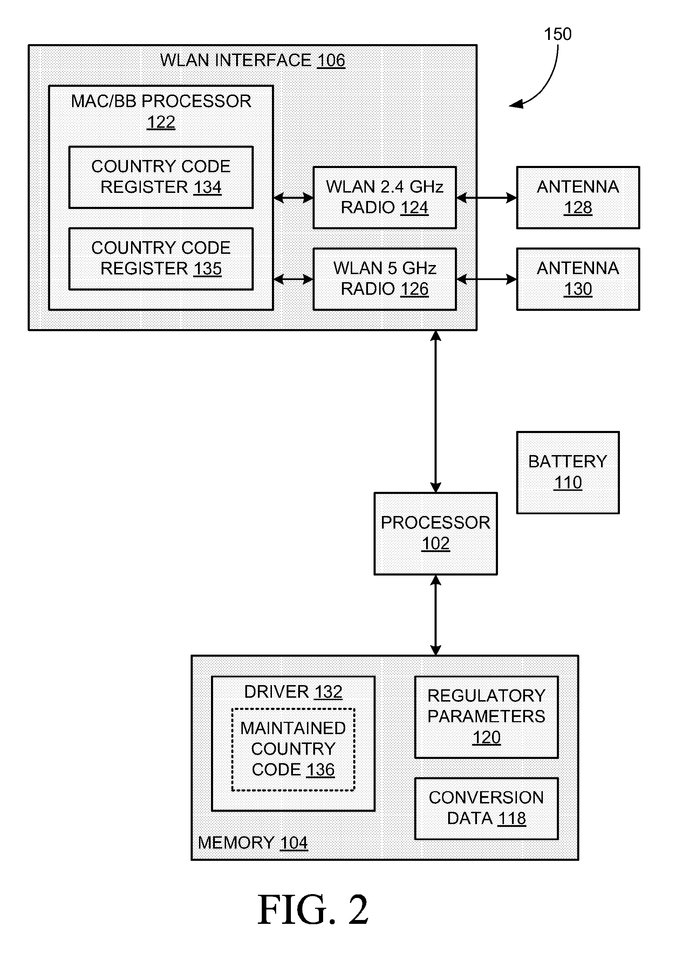

FIG. 2 is a block diagram of another exemplary mobile station 150. STA 150 differs from STA 100 of Figure 1 in that STA 150 lacks cellular network interface 108 and antenna 116. In the example shown in Figure 2, WLAN interface 106 is operable in two frequency bands (the 2.4 GHz band and the 5 GHz band) and therefore MAC/BB processor 122 is coupled to a 2.4 GHz radio 124 and to a 5 GHz radio 126. In other examples, WLAN interface 106 may be operable in only a single frequency band and may comprise only one WLAN radio. STA 150 comprises antenna 128 coupled to radio 124 and antenna 130 coupled to radio 126. In other examples, a single antenna may be shared by radio 124 and radio 126. STA 150 comprises other components that, for clarity, are not shown in Figure 2.

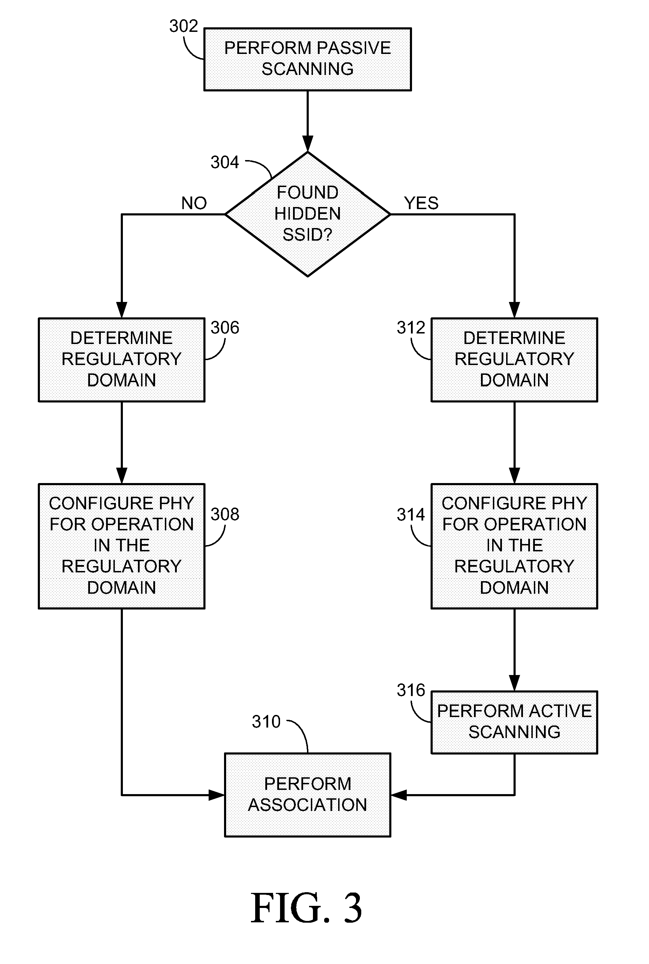

FIG. 3 is a flowchart of an exemplary method for scanning for wireless local area networks and associating with an access point of a wireless local area network. At 302, MAC/BB processor 122 performs passive scanning for wireless local area networks. If the results of the passive scanning are such that the received beacon frame does not include an SSID string, then the AP that broadcast the beacon frame is said to have a "hidden SSID". At 304, driver 132 checks whether it has found an AP having a hidden SSID. If not, then driver 132 has found, during the passive scanning, an AP for which the SSID is included in the beacon frames. Driver 132 then determines the WLAN regulatory domain in which the mobile station is currently located at 306, and configures the physical layer of WLAN interface 106 at 308 according to the WLAN regulatory domain that has been determined. An association procedure may then be performed at 310 which results in the mobile station being associated with the AP that broadcast the beacon frame detected during the passive scanning. The configuration of the physical layer must occur before the association procedure can be performed, because the association procedure involves transmissions by WLAN interface 106 and those transmissions ought to be conducted in accordance with the regulations of the WLAN regulatory domain in which the mobile station is currently located. If driver 132 has found, during the passive scanning, an AP that has a hidden SSID, driver 132 then determines at 312 the WLAN regulatory domain in which the mobile station is currently located, and configures the physical layer of WLAN interface 106 at 314 according to the WLAN regulatory domain that has been determined. MAC/BB processor 122 may then perform at 316 active scanning for wireless local area networks, which involves transmissions by WLAN interface 106 in accordance with the regulations of the WLAN regulatory domain in which the mobile station is currently located. If the active scanning is successful, an association procedure may then be performed at 310 to enable the mobile station to associate with the AP whose beacon frame was successfully detected during the active scanning.

FIG. 4 is a flowchart of an exemplary method for determining a WLAN regulatory domain in which a mobile station is currently located. The method of Figure 4 may be performed by STA 100 at 306 or at 312 in the method of Figure 3.

At 402, it is checked, either by driver 132 or within MAC/BB processor 122, whether one or more IEEE 802.11d country IEs have been received by WLAN interface 106. If so, then at 404 it is checked whether IEEE 802.11 d country IEs have been received in beacon frames on both the 2.4 GHz and the 5 GHz bands. If so, then information in the received country IEs is used to determine the WLAN regulatory domain in which the mobile station is currently located. For example, the ISO country code in the received country IEs may be programmed to country code register 134. In another example, the channel triplets in the received country IEs are programmed to MAC/BB processor 122. Optionally, at 406, an indication of the ISO country code (and/or of the channel triplets) in the received country IEs is maintained by driver 132.

If an IEEE 802.11 d country IE has been received in beacon frames only on the 2.4 GHz band, as checked at 408, or only on the 5 GHz band, as checked at 414, then the information in the received country IE is used to determine the WLAN regulatory domain for both bands, as indicated at 412 and at 414. Once the WLAN regulatory domain has been determined for the band in which no country IE was received, driver 132 needs to look up the appropriate regulatory parameters for that band that correspond to that WLAN regulatory domain, since the channel triplets for that band have not been received in the IEEE 802.11d country IE. For example, a 2.4 GHz AP will not advertise permissible 5 GHz channels, and a 5 GHz AP will not advertise permissible 2.4 GHz channels. Optionally, at 416, an indication of the ISO country code (and/or of the channel triplets) in the received country IEs is maintained by driver 132.

In the absence of any received IEEE 802.11 d country IEs, it is checked at 418 whether signals received via cellular network interface 108 include an MCC. If so, then the WLAN regulatory domain corresponding to the received MCC is used. For example, at 420, the received MCC is converted to an ISO country code. Examples for the conversion are described above with respect to Figure 1. If the WLAN regulatory domain is determined from the MCC, then the indication of the ISO country code and/or of the channel triplets maintained by driver 132 is not updated.

Although it is possible that a cellular carrier spans multiple countries with different WLAN regulatory domain requirements, most of the time the MCC is checked, it will not be different from that last time the mobile station roamed from one cell to another or from the last time the WLAN radio was turned off or put into a low-power consumption state. Accordingly, the mobile station may cache the received MCC, if it differs from the MCC currently cached by the mobile station.

In the absence of any received IEEE 802.11 d country IEs and in the absence of an MCC, driver 132 checks at 422 whether an indication of an ISO country code (and/or of channel triplets) is maintained. If so, then the maintained ISO country code and/or channel triplets are used at 428 to determine the WLAN regulatory domain and configure the PHY.

If not, then driver 132 checks at 426 whether the mobile station is branded for a particular carrier. A vendor identifier, which is a unique code for a carrier in a particular country, may be stored in non-volatile memory in or accessible by the mobile station, for example, on a subscriber identity module (SIM) card inserted into the mobile station. The WLAN regulatory domain corresponding to the particular country may be used as the WLAN regulatory domain in which the mobile station is currently located. For example, driver 132 may map the vendor ID to an ISO country code at 428.

In the absence of any received IEEE 802.11d country IEs, in the absence of an MCC, in the absence of a maintained indication of the country and/or channel triplets, and in the absence of a vendor ID, driver 132 may revert at 430 to a hard-coded default ISO country code to determine the WLAN regulatory domain in which the mobile station is currently located.

FIG. 5 is a flowchart of another exemplary method for determining a WLAN regulatory domain in which a mobile station is currently located. The method of Figure 5 may be performed by STA 150 at 306 or at 312 in the method of Figure 3. The method of Figure 5 differs from the method of Figure 4 in that steps 418 and 420 are missing. In the absence of any received IEEE 802.11d country IEs, the method for determining the WLAN regulatory domain proceeds to check at 422 whether an indication of the country and/or channel triplets has been maintained.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method in a mobile station (100, 150), the method comprising:
passively scanning for wireless local area networks via a wireless local area network 'WLAN' interface (106) of the mobile station (100, 150) that is operable in a first frequency band and in a second frequency band;
receiving in the first frequency band one or more first beacon frames lacking any indication of a WLAN regulatory domain in which the mobile station (100, 150) is currently located;
receiving in the second frequency band one or more second beacon frames comprising one or more indications of the WLAN regulatory domain;
retrieving regulatory parameters (120) of the WLAN regulatory domain for the first frequency band; and
configuring a physical layer of the WLAN interface (106) for operation in the first frequency band according to the regulatory parameters (120).

2. The method of claim 1, further comprising:
maintaining an indication (136) of the WLAN regulatory domain; and
subsequently, in the event that the physical layer is no longer configured for operation in any particular WLAN regulatory domain and no WLAN regulatory information is available from beacon frames received via the WLAN interface (106), retrieving regulatory parameters (120) of the WLAN regulatory domain for which the indication (136) has been maintained and configuring the physical layer for operation according to the regulatory parameters (120).

3. The method of claim 1, further comprising:
maintaining an indication (136) of the WLAN regulatory domain; and
subsequently, in the event that the physical layer is no longer configured for operation in any particular WLAN regulatory domain, no WLAN regulatory information is available from beacon frames received via the WLAN interface (106), and no mobile country code is available from signals received via a cellular network interface (108) of the mobile station (100), retrieving regulatory parameters (120) of the WLAN regulatory domain for which the indication (136) has been maintained and configuring the physical layer for operation according to the regulatory parameters.

4. A method in a mobile station (100, 150), the method comprising:
passively scanning for wireless local area networks via a wireless local area network 'WLAN' interface (106) of the mobile station (100, 150);
receiving one or more beacon frames comprising one or more indications of a WLAN regulatory domain;
configuring a physical layer of the WLAN interface (106) for operation in the WLAN regulatory domain;
maintaining an indication (136) of the WLAN regulatory domain; and
subsequently, in the event that the physical layer is no longer configured for operation in any particular WLAN regulatory domain and no WLAN regulatory information is available from beacon frames received via the WLAN interface (106), retrieving regulatory parameters (120) of the WLAN regulatory domain for which the indication has been maintained and configuring the physical layer for operation according to the regulatory parameters (120).

5. A method in a mobile station (100), the method comprising:
passively scanning for wireless local area networks via a wireless local area network 'WLAN' interface (106) of the mobile station (100);
receiving one or more beacon frames comprising one or more indications of a WLAN regulatory domain;
configuring a physical layer of the WLAN interface (106) for operation in the WLAN regulatory domain;
maintaining an indication (136) of the WLAN regulatory domain; and
subsequently, in the event that the physical layer is no longer configured for operation in any particular WLAN regulatory domain, no WLAN regulatory information is available from beacon frames received via the WLAN interface (106), and no mobile country code is available from signals received via a cellular network interface (108) of the mobile station, retrieving regulatory parameters (120) of the WLAN regulatory domain for which the indication has been maintained and configuring the physical layer for operation according to the regulatory parameters (120).

6. A method in a mobile station (100, 150) that has been branded with a vendor identifier, the method comprising:
identifying a country associated with the vendor identifier;
identifying a wireless local area network 'WLAN' regulatory domain corresponding to the country;
retrieving regulatory parameters (120) of the WLAN regulatory domain; and
configuring a physical layer of a WLAN interface (106) of the mobile station (100, 150) for operation according to the regulatory parameters.

7. A mobile station (100, 150) comprising:
a wireless local area network 'WLAN' interface (106) that is operable in a first frequency band and in a second frequency band;
a processor (102) coupled to the WLAN interface (106); and
a memory (104) coupled to the processor (102), the memory (104) arranged to store regulatory parameters (120) of one or more WLAN regulatory domains for the first frequency band and arranged to store a driver (132) for the WLAN interface (106) which, when executed by the processor (102), in the event that the WLAN interface (106) has received in the first frequency band one or more first beacon frames lacking any WLAN regulatory information and has received in the second frequency band one or more second beacon frames comprising one or more indications of a WLAN regulatory domain, is arranged to retrieve the regulatory parameters (120) for the WLAN regulatory domain and to configure a physical layer of the WLAN interface (106) for operation in the first frequency band according to the retrieved regulatory parameters (120).

8. The mobile station (100, 150) of claim 7, wherein the driver (132), when executed by the processor (102), is further arranged to maintain in the memory (104) an indication (136) of the WLAN regulatory domain, and in the event that the physical layer is no longer configured for operation in any particular WLAN regulatory domain and no WLAN regulatory information is available from beacon frames received via the WLAN interface (106), is further arranged to retrieve the regulatory parameters (120) for the WLAN regulatory domain for which the indication has been maintained and to configure the physical layer for operation according to the retrieved regulatory parameters (120).

9. The mobile station of claim 7, further comprising:
a cellular network interface (108) coupled to the processor (102),
wherein the driver (132), when executed by the processor (102), is further arranged to maintain an indication (136) of the WLAN regulatory domain in the memory (104), and in the event that the physical layer is no longer configured for operation in any particular WLAN regulatory domain, no WLAN regulatory information is available from beacon frames received via the WLAN interface (106), and no mobile country code is available from signals received via the cellular network interface (108), is further arranged to retrieve the regulatory parameters (120) for the WLAN regulatory domain for which the indication has been maintained and to configure the physical layer for operation according to the retrieved regulatory parameters (120).

10. A mobile station comprising:
a wireless local area network 'WLAN' interface (106);
a processor (102) coupled to the WLAN interface (106); and
a memory (104) coupled to the processor (102), the memory (104) arranged to store regulatory parameters (120) of one or more WLAN regulatory domains and arranged to store a driver (132) for the WLAN interface (106) which, when executed by the processor (102), is arranged to maintain an indication (136) of a WLAN regulatory domain information relating to which is available from beacon frames received via the WLAN interface (106), and in the event that a physical layer of the WLAN interface (106) is not configured for operation in any particular WLAN regulatory domain and no WLAN regulatory information is available from beacon frames received via the WLAN interface (106), is further arranged to retrieve the regulatory parameters (120) of the WLAN regulatory domain for which the indication (136) has been maintained and to configure the physical layer for operation according to the retrieved regulatory parameters (120).

11. A mobile station (100) comprising:
a wireless local area network 'WLAN' interface (106);
a processor (102) coupled to the WLAN interface (106);
a cellular network interface (108) coupled to the processor (102); and
a memory (104) coupled to the processor (102), the memory (104) arranged to store regulatory parameters (120) of one or more WLAN regulatory domains and arranged to store a driver (132) for the WLAN interface (106) which, when executed by the processor (102), is arranged to maintain an indication (136) of a WLAN regulatory domain information relating to which is available from beacon frames received via the WLAN interface (106), and in the event that a physical layer of the WLAN interface (106) is not configured for operation in any particular WLAN regulatory domain, no WLAN regulatory information is available from beacon frames received via the WLAN interface (106), and no mobile country code is available from signals received via the cellular network interface (108), is further arranged to retrieve the regulatory parameters (120) of the WLAN regulatory domain for which the indication has been maintained and to configure the physical layer for operation according to the retrieved regulatory parameters (120).

12. A mobile station (100, 150) comprising:
a wireless local area network 'WLAN' interface (106);
a processor (102) coupled to the WLAN interface (106); and
a memory (104) coupled to the processor (102), the memory (104) arranged to store regulatory parameters (120) for one or more WLAN regulatory domains and arranged to store a driver (132) for the WLAN interface (106) which, when executed by the processor (102), is arranged to identify the WLAN regulatory domain corresponding to a vendor identifier that is stored in non-volatile memory in or accessible by the mobile station (100, 150), to retrieve the regulatory parameters (120) for the identified WLAN regulatory domain and to configure a physical layer of the WLAN interface (106) for operation according to the retrieved regulatory parameters (120).

13. A computer readable medium storing computer readable instructions which, when executed by a processor of a computing device, cause said computing device to implement the steps of the method of any one of claims 1 to 6.

## Amended claims

### Amended claims in accordance with Rule 137(2) EPC.

**1.** A method in a mobile station (100, 150), the method comprising:
passively scanning in a first frequency band for wireless local area networks via a wireless local area network 'WLAN' interface (106) of the mobile station (100, 150) that is operable in the first frequency band and in a second frequency band;
receiving in the first frequency band one or more first beacon frames lacking any indication of a WLAN regulatory domain in which the mobile station (100, 150) is currently located;
passively scanning in the second frequency band for wireless local area networks via the WLAN interface (106);
receiving in the second frequency band one or more second beacon frames comprising one or more indications of the WLAN regulatory domain;
retrieving , based on the WLAN regulatory domain as determined from the one or more indications comprised in the one or more second beacon frames received in the second frequency band, regulatory parameters (120) of the WLAN regulatory domain for the first frequency band; and
configuring a physical layer of the WLAN interface (106) for operation in the first frequency band according to the regulatory parameters (120).

**2.** The method of claim 1, further comprising:
maintaining an indication (136) of the WLAN regulatory domain; and
subsequently, in the event that the physical layer is no longer configured for operation in any particular WLAN regulatory domain and no WLAN regulatory information is available from beacon frames received via the WLAN interface (106), retrieving regulatory parameters (120) of the WLAN regulatory domain for which the indication (136) has been maintained and configuring the physical layer for operation according to the regulatory parameters (120).

**3.** The method of claim 1, further comprising:
maintaining an indication (136) of the WLAN regulatory domain; and
subsequently, in the event that the physical layer is no longer configured for operation in any particular WLAN regulatory domain, no WLAN regulatory information is available from beacon frames received via the WLAN interface (106), and no mobile country code is available from signals received via a cellular network interface (108) of the mobile station (100), retrieving regulatory parameters (120) of the WLAN regulatory domain for which the indication (136) has been maintained and configuring the physical layer for operation according to the regulatory parameters.

**4.** A mobile station (100, 150) comprising:
a wireless local area network 'WLAN' interface (106) that is operable in a first frequency band and in a second frequency band;
a processor (102) coupled to the WLAN interface (106); and
a memory (104) coupled to the processor (102), the memory (104) arranged to store regulatory parameters (120) of one or more WLAN regulatory domains for the first frequency band and arranged to store a driver (132) for the WLAN interface (106) which, when executed by the processor (102), in the event that the WLAN interface (106) has received in the first frequency band one or more first beacon frames lacking any WLAN regulatory information and has received in the second frequency band one or more second beacon frames comprising one or more indications of a WLAN regulatory domain, is arranged to retrieve, based on the WLAN regulatory domain as determined from the one or more indications comprised in the one or more second beacon frames received in the second frequency band, the regulatory parameters (120) for the WLAN regulatory domain and to configure a physical layer of the WLAN interface (106) for operation in the first frequency band according to the retrieved regulatory parameters (120).

**5.** The mobile station (100, 150) of claim 4, wherein the driver (132), when executed by the processor (102), is further arranged to maintain in the memory (104) an indication (136) of the WLAN regulatory domain, and in the event that the physical layer is no longer configured for operation in any particular WLAN regulatory domain and no WLAN regulatory information is available from beacon frames received via the WLAN interface (106), is further arranged to retrieve the regulatory parameters (120) for the WLAN regulatory domain for which the indication has been maintained and to configure the physical layer for operation according to the retrieved regulatory parameters (120).

**6.** The mobile station of claim 4, further comprising:
a cellular network interface (108) coupled to the processor (102),
wherein the driver (132), when executed by the processor (102), is further arranged to maintain an indication (136) of the WLAN regulatory domain in the memory (104), and in the event that the physical layer is no longer configured for operation in any particular WLAN regulatory domain, no WLAN regulatory information is available from beacon frames received via the WLAN interface (106), and no mobile country code is available from signals received via the cellular network interface (108), is further arranged to retrieve the regulatory parameters (120) for the WLAN regulatory domain for which the indication has been maintained and to configure the physical layer for operation according to the retrieved regulatory parameters (120).

**7.** A computer readable medium storing computer readable instructions which, when executed by a processor of a computing device, cause said computing device to implement the steps of the method of any one of claims 1 to 3.
